# EUROPÄISCHE PATENTSCHRIFT

(11) **EP 0 431 562 B1**
(45) Veröffentlichungstag und Bekanntmachung des Hinweises auf die Patenterteilung: **18.11.1993**
(21) Anmeldenummer: 90123220.7
(22) Anmeldetag: 04.12.1990
(51) Int. Cl.: B23K 11/31

(54) **Schweisswerkzeug zum Punktschweissen mit mehrachsigen Manipulatoren**
Welding tool for welding with multi-axis manipulator
Outil de soudage pour le soudage par points avec des manipulateurs à axes multiples

(30) Priorität: 06.12.1989 DE 8914370 U
(43) Veröffentlichungstag der Anmeldung: 12.06.1991
(73) Patentinhaber: KUKA Schweissanlagen & Roboter GmbH, D-86165 Augsburg (DE)
(72) Erfinder: Zimmer, Ernst, W-8904 Friedberg (DE)
(74) Vertreter: Ernicke, Hans-Dieter, Dipl.-Ing.

(56) Entgegenhaltungen:
- EP-A- 0 090 060
- EP-A- 0 121 909
- EP-A- 0 123 202
- US-A- 3 632 958

## Beschreibung

Die Erfindung betrifft ein Schweißwerkzeug mit den Merkmalen im Oberbegriff des Hauptanspruchs.

Beim Punktschweißen muß die Schweißelektrode mit möglichst exakter Ausrichtung normal zur Schweißfläche und mit Kraft auf das Werkstück gedrückt werden. Die Anpreßkraft wird vom Manipulator selbst oder von einer zwischengeschalteten Elektrodenandrückvorrichtung aufgebracht. Bei bekannten Schweißwerkzeugen ist die Elektrode mit einer starren Seitenführung im Elektrodenhalter gelagert und dieser wiederum starr mit dem Manipulator bzw. einem Industrie-Roboter verbunden. Wird die Elektrode schräg auf das Werkstück angesetzt, kann sie unter Einleitung der Andrückkraft auf dem Werkstück radieren oder bei Plastifizierung des Materials wegschmieren. Es kommt auch vor, daß sich Elektroden unter der Andrückkraft verbiegen. Die Krafteinleitung hat in diesen Fällen außerdem Schwingungen im ganzen System zur Folge. Die vorgenannten verschiedenen Erscheinungen führen insgesamt zu einer Verschlechterung der Schweißergebnisse.

Es ist daher Aufgabe der vorliegenden Erfindung, eine Möglichkeit zur Verbesserung der Schweißergebnisse aufzuzeigen.

Die Erfindung löst diese Aufgabe mit den Merkmalen in Kennzeichenteil des Hauptanspruchs. Die Schweißelektrode ist im Elektrodenhalter mehrachsig schwenkbar gelagert, wobei sie mit dem Lager direkt oder mittelbar über eine Andrückvorrichtung verbunden sein kann.

Die mehrachsige Lagerung wirkt sich im Fall eines schrägen Ansatzes der Elektrode auf dem Werkstück in mehrfacher Hinsicht positiv aus. Zum einen wird ein Verbiegen oder Abknicken der Elektrode durch die Nachgiebigkeit des Lagers mit Sicherheit verhindert. Auch die Führungen der Elektrode in der Andrückvorrichtung werden entlastet und geschont.

Zum anderen bleibt die Elektrode nun auch sicher am gewünschten Arbeitspunkt und schmiert nicht mehr weg. In Verbindung mit der balligen Form des Elektrodenkopfes ergibt sich außerdem ein besonders guter Abbrand an der Schweißstelle. Bei Krafteinleitung entsteht durch das federnde Nachgeben der verschiedenen Manipulator- und insbesondere Industrie-Roboter-Achsen eine wiegende Bewegung des Elektrodenkopfes auf dem Arbeitspunkt. Dies vergleichmäßigt und verbessert den Abbrand, ohne daß der Elektrodenkopf den Arbeitspunkt verläßt. Vorteilhaft ist ferner, daß die elastischen Ausweichbewegungen der Manipulator- oder Roboterachsen von den Werkzeugbewegungen entkoppelt und damit nicht mehr beeinflußt sind.

Die Rückstellvorrichtung sorgt dafür, daß die Elektrode nach dem Schweißen automatisch wieder ihre Ausgangsposition und ihre normale Ausrichtung im Elektrodenhalter einnimmt. Je nach Gestaltung des Lagers können ein oder mehrere Rückstellvorrichtungen vorgesehen sein. Ihre Ausbildung als federnde Kugelraste stellt die einfachste, kostengünstigste und betriebssicherste Gestaltungsmöglichkeit dar. Daneben sind aber auch andere konstruktive Ausgestaltungen möglich.

Das Lager zur Verbindung der Elektrode mit dem Elektrodenhalter besitzt mindestens zwei Achsen, um jede Schrägstellung kompensieren zu können. Es kann in unterschiedlicher Weise ausgeführt sein. In dem bevorzugten Ausführungsbeispiel ist es als Kardan- oder Kugelgelenk gestaltet. Beide Ausführungsformen sind besonders wirtschaftlich und betriebssicher und ermöglichen eine exakte Lagereinstellung.

In den Unteransprüchen sind weitere vorteilhafte Ausgestaltungen der Erfindung angegeben.

In den Zeichnungen ist die Erfindung beispielsweise und schematisch dargestellt. Im einzelnen zeigen:
- Fig. 1:: in Seitenansicht einen mehrachsigen Industrie-Roboter mit einem längsgerichteten Schweißwerkzeug zum Punktschweißen,
- Fig. 2:: das Schweißwerkzeug mit einem Kugelgelenk im Detail und im Längsschnitt,
- Fig. 3:: eine Variation mit einem quergerichteten Schweißwerkzeug und einem Kardangelenk in abgebrochener und vergrößerter Seitenansicht,
- Fig. 4:: eine abgebrochenen Draufsicht auf das Kardangelenk und
- Fig. 5:: das Schweißwerkzeug in Variation zu Fig. 2 mit einem abgewandelten Kugelgelenk.

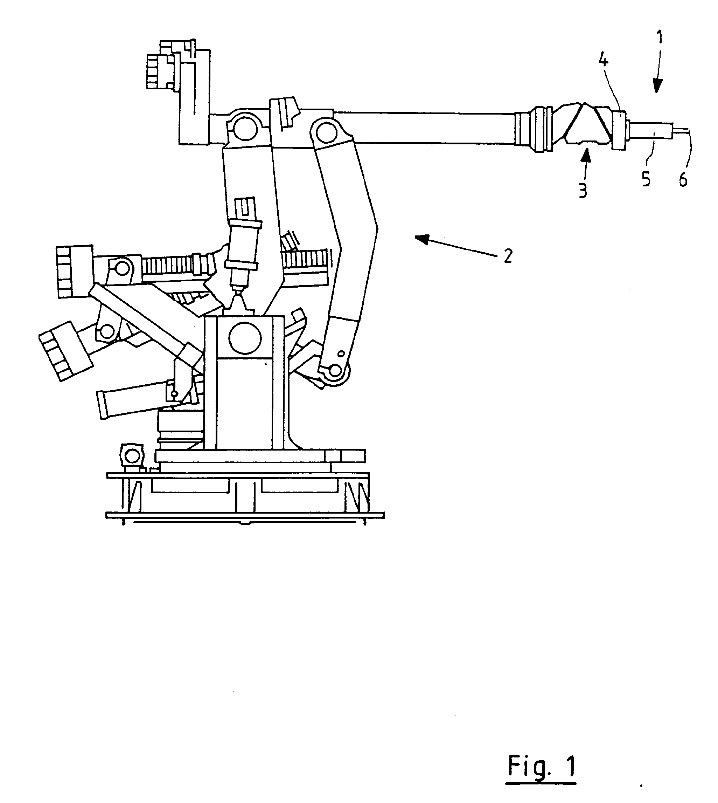

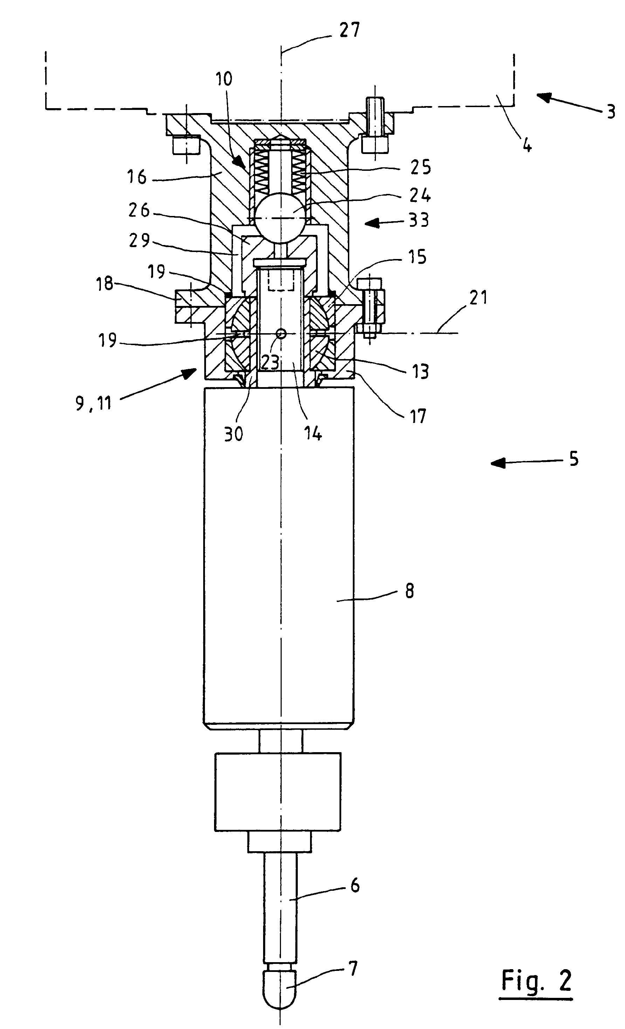

In Fig. 1 ist ein mehrachsiger Industrie-Roboter (2) dargestellt, der zum Punktschweißen beispielsweise von Fahrzeugkarosserien eingesetzt wird. Er weist hierzu ein nachstehend näher beschriebenes Schweißwerkzeug (1) auf, das an der Roboterhand (3) angeflanscht ist. Das Schweißwerkzeug (1) besteht aus einem Elektrodenhalter (5), in dem eine Schweißelektrode (6) über ein Lager (9) nach mehreren Richtungen ausweichfähig gelagert ist. Die Schweißelektrode (6) ist mit Versorgungsleitungen, Anschlüssen etc. versehen, die der Einfachheit halber nicht dargestellt sind. Der Elektrodenhalter (5) ist mit der Anschlußfläche (4) der Roboterhand (3) verbunden und weist ein Halterungsgehäuse (33) sowie gegebenenfalls (vgl. Fig. 2) eine Elektroden-Andrückvorrichtung (8) auf.

Fig. 2 zeigt das Schweißwerkzeug im Detail. Die Elektrode (6) besitzt einen über eine Steckverbindung austauschbaren Elektrodenkopf (7) mit einer ballig verrundeten Spitze. Im gezeigten Ausführungsbeispiel ist die Verrundung halbkreisförmig, sie kann aber auch eine andere Gestalt haben. Die Schweißelektrode (6) ist über einen Zwischenflansch in der Elektroden-Andrückvorrichtung (8) längsbeweglich geführt und wird von dieser gegen das Werkstück zum Schweißen angepreßt. Die Andrückvorrichtung (8) weist hierzu einen pneumatischen oder hydraulischen Stellzylinder auf (nicht dargestellt).

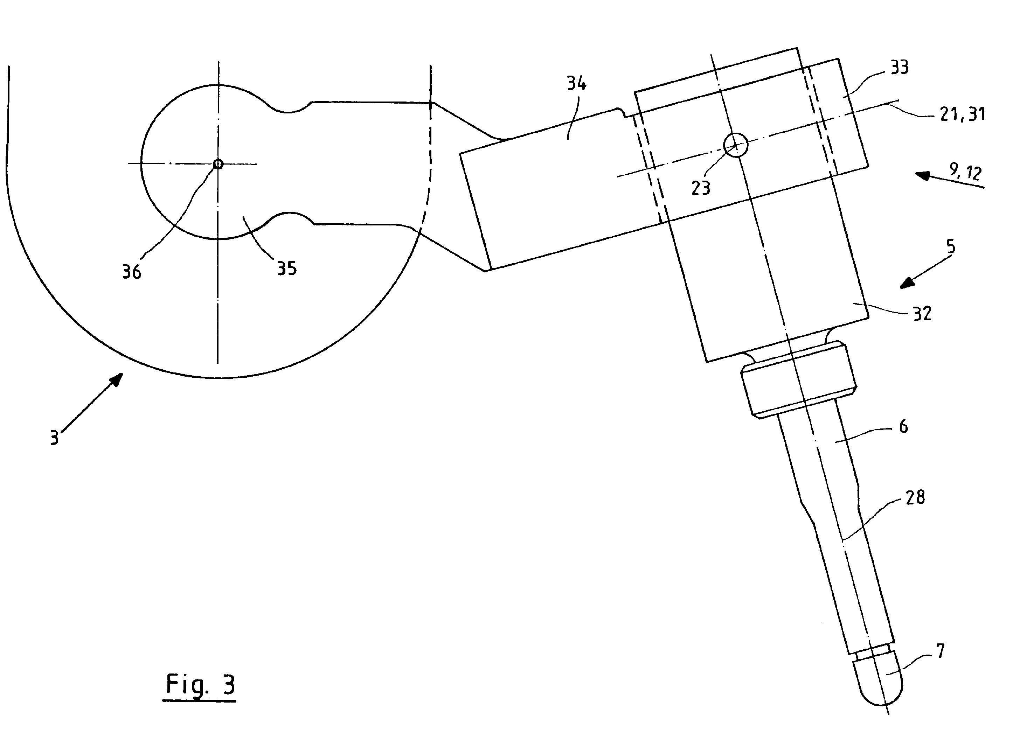

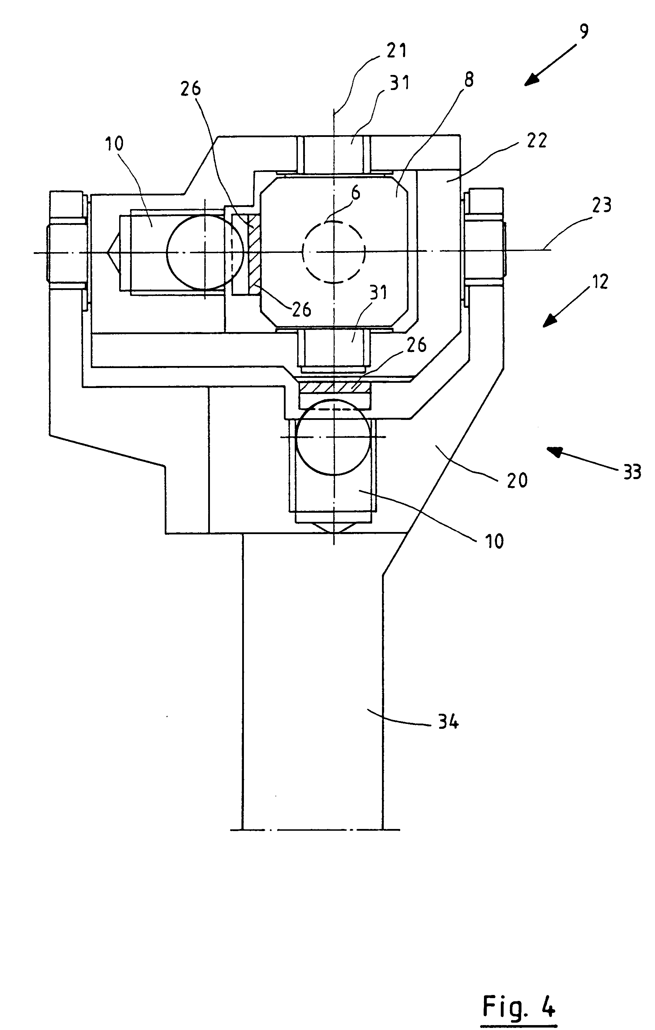

In Variation gemäß Fig. 3 und 4 kann die Andrückvorrichtung (8) auch wegfallen und die Anpreßkraft unter einer entsprechenden Steuerung vom Industrie-Roboter (2) selbst aufgebracht werden.

Das Halterungsgehäuse (33) besteht im Ausführungsbeispiel von Fig. 1 und 2 aus zwei Gehäusehälften (16,17), die miteinander einen Hohlraum (29) einschließen und über einen Verbindungsflansch (18) miteinander verbunden sind. Das Halterungsgehäuse (33) ist direkt an der Anschlußplatte (4) der Roboterhand (3) angeschraubt und erstreckt sich zusammen mit der Elektrode (6) längs der Handdrehachse (27).

In Fig. 3 und 4 besteht das Halterungsgehäuse (33) aus einer äußeren Lagergabel (20) und einem inneren Lagergehäuse (22) und ist mit einem Lagerarm (34) versehen, der über eine Kupplungsnabe (35) mit der Roboterhand (3) verbunden und angetrieben ist. Die Roboterhand (3) ist in der gezeigten Ausführungsform anders als in Fig. 1 gestaltet und dreht abtriebsseitig um eine querverlaufende Hand-Drehachse (36). Über die Kupplungsnabe (35) wird die Drehung der Roboterhand (3) in eine Nick- und Andrückbewegung des Elektrodenhalters (5) umgesetzt. Alternativ läßt sich der gezeigte Elektrodenhalter (5) auch an einer Roboterhand (3) gemäß Fig. 1 mit längsgerichteter Hand-Drehachse (27) über ein Zwischengetriebe anschließen, das die Abtriebsdrehbewegung an der Kupplungsnabe (35) in die vorerwähnte Nickbewegung umrichtet.

Die Elektrode (6) ist direkt (vgl. Fig. 3 und 4) oder über die zwischengeschaltete Andrückvorrichtung (8) (vgl. Fig. 1 und 2) mittels eines mehrachsigen Lagers (9) mit dem Halterungsgehäuse (33) verbunden.

In Fig. 2 ist das Lager (9) als Kugelgelenk (11) ausgebildet. Es besteht aus einer beidseits abgeflachten Kugel (13), die in einer nachgeformten und ebenfalls beidseits abgeflachten Führungsschale (15) ruht. Von der Andrückvorrichtung (8) ragt ein Zentrierbolzen (14) nach oben, der die Kugel (13) durchsetzt und an dessen Ende eine Rückstellvorrichtung (10) angeordnet ist. Der Zentrierbolzen (14) erstreckt sich in Ruhe- oder Normalstellung in Richtung der Hand-Drehachse (27). Er ist in eine Führungshülse (30) eingesetzt, die ihrerseits paßgenau in einer entsprechenden Bohrung der Kugel (13) geführt ist.

Wie Fig. 2 verdeutlicht, hat das Kugelgelenk (11) zwei rotatorische Freiheitsgrade, die durch die beiden senkrecht zueinander stehende zentrischen Achsen (21,23) verkörpert werden. Die Achsen (21,23) sind in Ruhe- oder Normalstellung der Elektrode (6) zu deren Längsachse (28) senkrecht ausgerichtet. Der dritte rotatorische Freiheitsgrad des Kugelgelenks (11) ist durch eine Verdrehsicherung (nicht dargestellt) gesperrt. Die Elektrode (6) kann entsprechend der beiden Freiheitsgrade des Lagers (9) um begrenzte Winkel schwenken. Die Begrenzung ist durch Anschlag an den Wänden des Hohlraums (29) gegeben.

Um eine sichere und spielfreie Führung zu bieten, sind die Kugel (13) und die Führungsschale (15) querverlaufend in der Mitte geteilt. Zwischen den beiden Kugelhälften ist eine Einstellscheibe (19) in Form einer Paßscheibe eingesetzt. Die beiden Schalenhälften sind voneinander unter Bildung eines Freiraumes distanziert und werden von den beiden Gehäusehälften (16,17) ebenfalls unter Einlage einer Einstellscheibe (19) zusammengespannt. Über die zusammengespannten Führungsschalen (15) werden auch die beiden Kugelhälften zusammengehalten und an die Einstellscheibe (19) gepreßt. Die Führungsschalen (15) sind ihrerseits in den beiden Gehäusehälften (16,17) geführt, wobei sie zum größten Teil in der unteren Gehäusehälfte (17) ruhen.

Die untere Gehäusehälfte (17) läßt im Boden eine Öffnung für den Durchtritt des Zentrierbolzens (14) mit seiner Führungshülse (30) frei. Die Führungshülse (30) besitzt am unteren Ende einen überstehenden Kragen, mit dem sie zum einen an der unteren Kugelhälfte anliegt. Zum anderen drückt ein elastischer Dichtring in der Gehäuseöffnung gegen den Kragen.

Die Rückstellvorrichtung (10) ist als Kugelraste ausgebildet. Hierzu ist in einer längs der Elektrodenachse (28) verlaufenden zentrischen Bohrung eine Kugel (24) längsbeweglich geführt und rückwärtig von einer Feder (25) beaufschlagt. Auf dem Kopf des Zentrierbolzens (14) ist eine entsprechende Kugelaufnahme (26) angeschraubt. Diese besitzt eine der Kugel (24) nachgeformte, flache kreisförmige Pfanne. Die Kugel- und Pfannengröße sind auf den seitlichen Abstand der Kugelaufnahme von den Gehäusewänden abgestimmt. Die Rastkugel (24) und ihre Pfanne geraten hierdurch nie außer Eingriff.

Die Anpreßkraft der Rückstellvorrichtung läßt sich durch Federveränderung einstellen und wird auf die Reibkraft zwischen dem Werkstück und dem in Schweißstellung angepreßten Elektrodenkopf (7) abgestimmt. Die Kraftwirkung der Rückstellvorrichtung (10) ist einerseits kleiner als die Reibkraft, damit die Elektrode (6) über das Lager (9) ausschwenkt, bevor sie auf dem Werkstück wegrutscht. Anderseits ist die Kraftwirkung der Rückstellvorrichtung (10) aber so groß, daß die ausgeschwenkte Elektrode (6) mit ihren Anbauteilen nach Entlastung zuverlässig in die Ausgangsstellung zurückkehrt. Die Reibkraft variiert mit den Werkstücken, den Werkstoffen, der erwünschten Andrückkraft, der Elektrodengestaltung etc. Die exakte Abstimmung wird daher durch Optimierungsversuche erzielt.

Fig. 3 und 4 zeigen eine Variante des Lagers (9), das in diesem Fall als zweiachsiges Kardangelenk (12) ausgebildet ist. Die Elektrode (6) ist hier direkt mit dem Kardangelenk (12) bzw. dem Halterungsgehäuse (33) verbunden. Sie besitzt dazu am oberen Ende ein Anschlußteil (32) mit zwei quer abstehenden Achsbolzen (31), die um die Achse (21) drehbar im inneren Lagergehäuse (22) gelagert sind. Das Lagergehäuse (22) ist seinerseits um die zweite Achse (23) drehbar in der äußeren Lagergabel (20) gehalten. Die Lagergabel (20) ist mit dem Lagerarm (34) verbunden.

Bei dieser Ausführungsform ist die Schweißelektrode (6) quer zur Hand-Drehachse (36) ausgerichtet. Wie beim Kugelgelenk (11) stehen die beiden Achsen (21,23) senkrecht zueinander und zur Elektrodenlängsachse (28) (in Normalstellung der Elektrode). Auch sind die Schwenkwinkel durch Anschlag am Halterungsgehäuse (33) beschränkt.

Im Boden der Lagergabel (20) ist eine Rückstellvorrichtung (10) für die Achse (23) angeordnet, die in der vorbeschriebenen Weise als Kugelraste ausgebildet ist und auf eine Kugelaufnahme (26) an der Seite des Lagergehäuses (22) einwirkt. Im Lagergehäuse (22) ist eine eigene Rückstellvorrichtung (10) für die Achse (21) untergebracht. Die Kugelaufnahmen (26) sind in diesem Fall der direkten Achszuordnung als prismatische Rinnen ausgebildet.

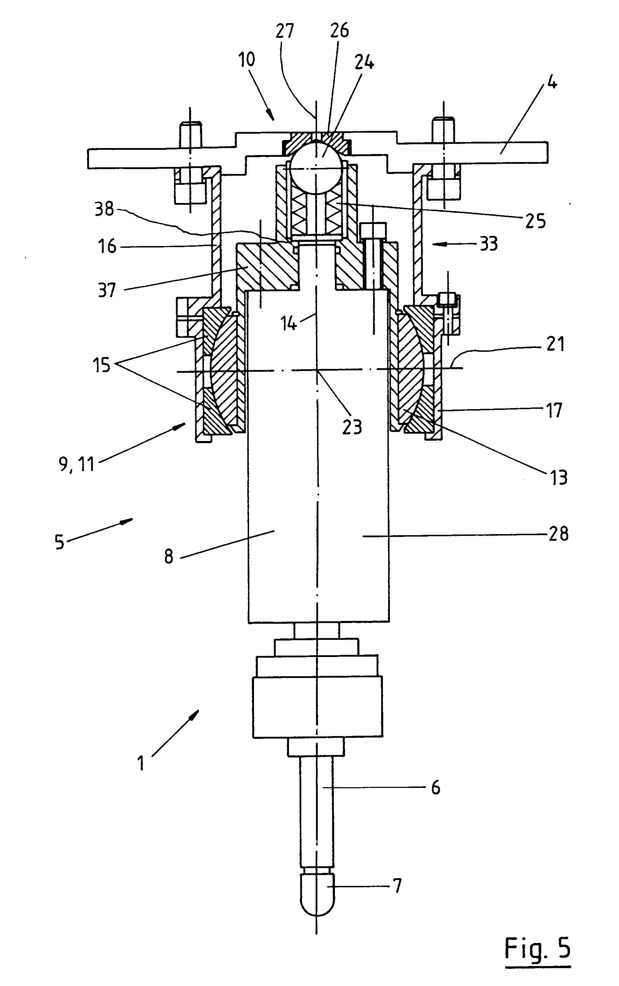

Fig. 5 zeigt eine Abwandlung des Schweißwerkzeugs (1) gegenüber Fig. 2. Das Kugelgelenk (11) ist in Fig. 5 nach unten gewandert, wobei die beiden Hälften der Kugel (13) nun am Gehäuse der Elektroden-Andrückvorrichtung (8) sitzen. Hierdurch vergrößert sich der Abstand der wirksamen Kugelachsen gegenüber der Rückstellvorrichtung (10). Die Vergrößerung der Rückstellhebellänge wirkt sich in kleineren Rückstellkräften und einer höheren Sicherheit in der Rückholung und dem Halt in der Grundposition aus. Außerdem ergibt sich eine Verkürzung der Baulänge des Schweißwerkzeugs (1).

Die Elektroden-Andrückvorrichtung (8) ist im oberen Bereich von einer Fassung (37) umgeben, die lösbar durch eine Schraube auf der Andrückvorrichtung (8) befestigt ist. Die hohlgebohrte Kugel (13) sitzt auf dem unteren Ende der Fassung (37) und befindet sich damit in Höhe des oberen Bereiches der Andrückvorrichtung (8). Analog zu Fig. 2 sind Führungsschalen (15) und zwei miteinander verschraubte Gehäusehälften (16,17) vorhanden.

Auch die Rückstellvorrichtung (10) ist etwas anders als in Fig. 2 ausgebildet. Die Andrückvorrichtung (8) weist am oberen Ende einen aufragenden Zentrierbolzen (14) auf, der durch die hutförmige Fassung (37) tritt. Oberhalb des Zentrierbolzens (14) besitzt die Fassung (37) einen rohrförmigen Abschnitt, in dem die Kugel (24) und die Feder (25) höhenbeweglich geführt sind. Die Feder (25) stützt sich auf einem Absatz (38) im Bodenbereich des vorgenannten rohrförmigen Abschnitts ab. Die Kugelaufnahme (26) ist in Fig. 5 in der Anschlußfläche (4) angeordnet. Statt der Anschlußfläche (4) kann auch eine entsprechende Adapterscheibe vorgesehen sein.

Das erfindungsgemäße Schweißwerkzeug funktioniert wie folgt:

Die Elektrode (6) wird vom Industrie-Roboter (2) an das Werkstück bis zu einem bestimmten Abstand herangefahren, wobei die Elektrode (6) möglichst senkrecht zur Werkstückoberfläche stehen sollte. Aus dieser Stellung heraus wird die Andrückvorrichtung (8) bzw. die Kupplungsnabe (35) betätigt, die die Elektrode (6) an das Werkstück preßt. Beim Anpressen geben die Manipulator- bzw. Roboterachsen nach. Hieraus resultiert, auch bei geplantem senkrechten Elektrodenansatz, eine Schrägstellung der Elektrode auf dem Werkstück, was zum Verrutschen der Elektrode (6) führen könnte. Nun tritt aber das Lager (9) in Funktion und kompensiert die Fehlwirkung. Kurz bevor die rückhaltende Reibkraft überschritten ist, schwenkt die Elektrode (6) über das Lager (9) gegenüber dem Halterungsgehäuse (33), so daß ein Wegrutschen verhindert wird. Durch die zwei Freiheitsgrade des Lagers (9) können Fehlwirkungen nach allen Richtungen kompensiert werden.

Durch die ballige Verrundung bleibt der Elektrodenkopf (7) am Arbeitspunkt und wälzt an dieser Stelle nur ab. Aufgrund der Nachgiebigkeit in den verschiedenen Roboterachsen führt er außerdem beim Andrücken eine wiegende Bewegung am Arbeitspunkt aus, die für eine Vergrößerung der beaufschlagten Punktfläche und damit zu einer Vergleichmäßigung des Abbrandes am Elektrodenkopf (7) führt. Bei Entlastung und Abheben der Elektrode (6) tritt die Rückstellvorrichtung (10) in Funktion und bringt die Elektrode (6) wieder in die in Fig. 2, 3 und 5 gezeigte Ausgangsstellung.

In Variation zu den gezeigten Ausführungsbeispielen kann das Schweißwerkzeug (1) auch an einfacheren Manipulatoren mit weniger Achsen, beispielsweise Kreuzsschlitten oder dgl., angeordnet sein. Das Schweißwerkzeug eignet sich allerdings besonders für hochentwickelte Manipulatoren wie den gezeigten sechsachsigen Industrie-Roboter.

Ferner können die einzelnen Bauelemente und Lagergestaltungen der gezeigten Ausführungsbeispiele auch ausgetauscht werden. Beispielsweise läßt sich in Abwandlung von Fig. 3 und 4 das Kardangelenk (12) auch mit einer zwischengeschalteten Elektroden-Andrückvorrichtung (8) kombinieren. Desgleichen kann das Halterungsgehäuse (33) mit dem Kardangelenk (12) auch in der Art und Ausrichtung von Fig. 1 an der Manipulatorhand (3) befestigt sein. Andererseits kann auch ein Kugelgelenk (11) bei Fig. 3 und 4 zum Einsatz kommen. In weiterer Variation kann der Elektrodenhalter (5) mit anderer Ausrichtung, z.B. quer, an der Anschlußfläche (4) des Manipulators (2) befestigt sein.

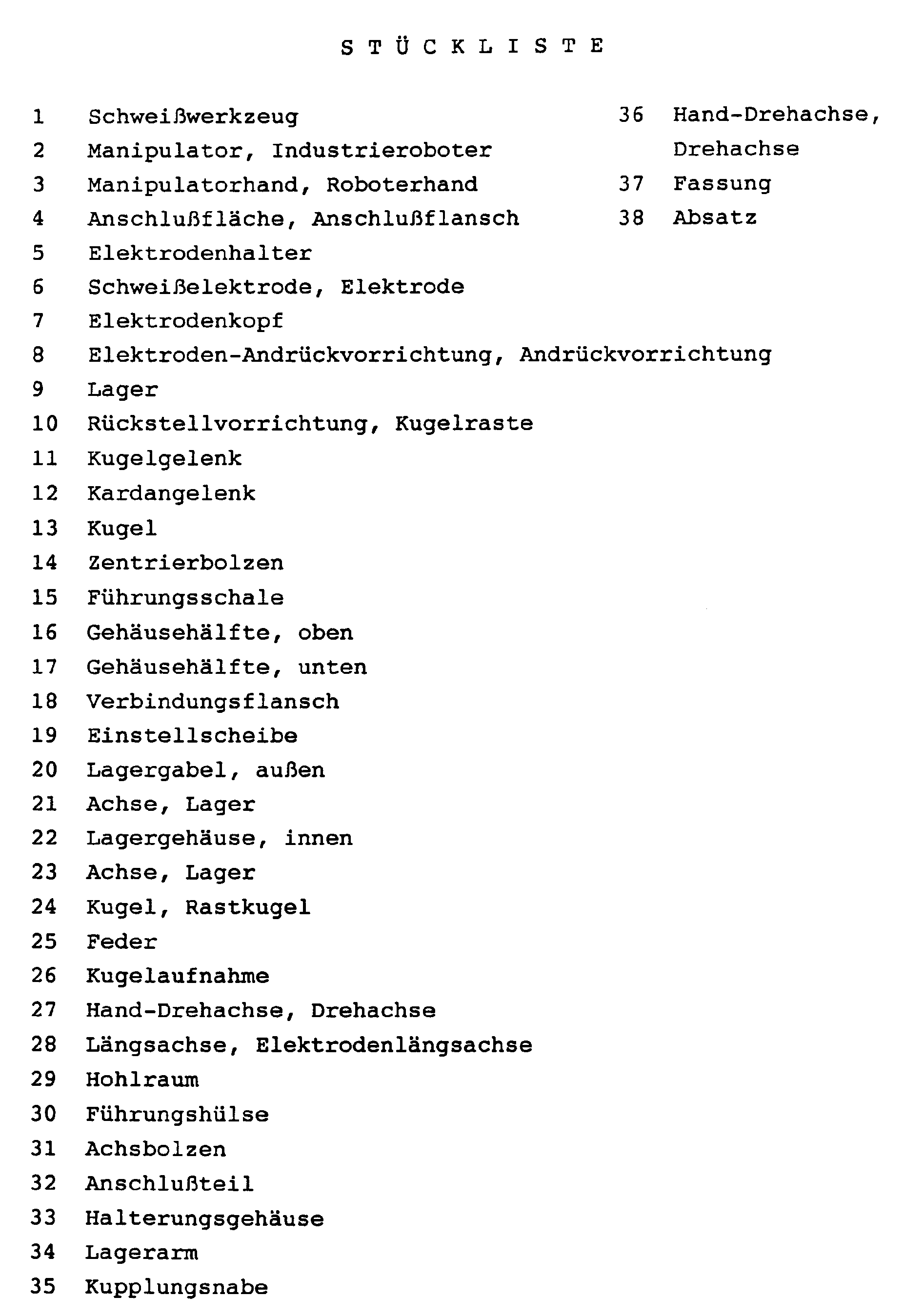

## Patentansprüche

1. Schweißwerkzeug zum Punktschweißen mit mehrachsigen Manipulatoren, bestehend aus einem mit der Manipulatorhand verbundenen Elektrodenhalter mit einer Schweißelektrode, dadurch **gekennzeichnet**, daß die Schweißelektrode (6) über ein um mehrere Achsen (21,23) schwenkbares Lager (9) mit dem Elektrodenhalter (5) verbunden ist, wobei das Lager (9) ein oder mehrere Rückstellvorrichtungen (10) aufweist.

2. Schweißwerkzeug nach Anspruch 1, dadurch **gekennzeichnet**, daß das Lager (9) zwei Achsen (21,23) entsprechend den rotatorischen Hauptfreiheitsgraden aufweist, die senkrecht zueinander und zur Längsachse (28) der Schweißelektrode (6) in Normalstellung ausgerichtet sind.

3. Schweißwerkzeug nach Anspruch 1 oder 2, dadurch **gekennzeichnet**, daß der Elektrodenhalter (5) eine Elektroden-Andrückvorrichtung (8) aufweist, die zwischen der Schweißelektrode (6) und dem Lager (9) angeordnet ist.

4. Schweißwerkzeug nach Anspruch 1, 2 oder 3, dadurch **gekennzeichnet**, daß das Lager (9) als Kugelgelenk (11) oder Kardangelenk (12) ausgebildet ist.

5. Schweißwerkzeug nach Anspruch 3 oder 4, dadurch **gekennzeichnet**, daß die Schweißelektrode (6) mit einem Zentrierbolzen (14) direkt oder mittelbar verbunden ist, der die Kugel (13) des Kugelgelenks (11) durchsetzt und am Ende mit der Rückstellvorrichtung (10) verbunden ist.

6. Schweißwerkzeug nach Anspruch 3 oder 4, dadurch **gekennzeichnet**, daß die Elektroden-Andrückvorrichtung (8) die Kugel (13) des Kugelgelenks (11) durchsetzt und oberhalb des Kugelgelenks (11) einen Zentrierbolzen (14) aufweist, der mit der Rückstellvorrichtung (10) verbunden ist.

7. Schweißwerkzeug nach Anspruch 4, 5 oder 6, dadurch **gekennzeichnet**, daß der Elektrodenhalter (5) ein Halterungsgehäuse (33) mit zwei miteinander verbundene Gehäusehälften (16,17) aufweist, in denen das Kugelgelenk (11) geführt und eingespannt ist.

8. Schweißwerkzeug nach Anspruch 7, dadurch **gekennzeichnet**, daß die Kugel (13) und die Führungsschale (15) des Kugelgelenks (11) zweigeteilt und jeweils über Einstellscheiben (19) zusammengespannt sind.

9. Schweißwerkzeug nach Anspruch 1 oder 4, dadurch **gekennzeichnet**, daß das Kardangelenk (12) zwei Achsen (21,23) aufweist, wobei für jede Achse (21,23) eine eigene Rückstellvorrichtung (10) vorgesehen ist.

10. Schweißwerkzeug nach Anspruch 1 oder einem der folgenden, dadurch **gekennzeichnet**, daß die Rückstellvorrichtung (10) als federne Kugelraste ausgebildet ist.

11. Manipulator mit einem Schweißwerkzeug nach Anspruch 1, 2 oder 3, dadurch **gekennzeichnet**, daß der Elektrodenhalter (5) und die Schweißelektrode (6) längs der Drehachse (27) der Manipulatorhand (3) ausgerichtet sind.

12. Manipulator mit einem Schweißwerkzeug nach Anspruch 1 oder einem der folgenden, dadurch **gekennzeichnet**, daß die Schweißelektrode (6) im Winkel zur Handdrehachse (27,36) ausgerichtet ist und der Elektrodenhalter (5) über eine Kupplungsnabe (35) drehbar mit der Manipulatorhand (3) verbunden und angetrieben ist.

## Claims

1. Welding tool for spot welding with multi-axis manipulators, comprising an electrode holder connected to the manipulator hand and having a welding electrode, characterized in that the welding electrode (6) is connected by way of a bearing (9) which may be pivoted about a plurality of axes (21, 23) to the electrode holder (5), the bearing (9) having one or more reset means (10).

2. Welding tool according to Claim 1, characterized in that the bearing (9) has two axes (21, 23) corresponding to the main rotational degrees of freedom, which are disposed perpendicular with respect to one another and to the longitudinal axis (28) of the welding electrode (6) in the normal position.

3. Welding tool according to Claim 1 or 2, characterized in that the electrode holder (5) has an electrode pressing means (8) which is arranged between the welding electrode (6) and the bearing (9).

4. Welding tool according to Claim 1, 2 or 3, characterized in that the bearing (9) is constructed as a ball-and-socket joint (11) or a universal joint (12).

5. Welding tool according to Claim 3 or 4, characterized in that the welding electrode (6) is directly or indirectly connected to a centring pin (14) which passes through the ball (13) of the ball-and-socket joint (11) and is connected at the end to the reset means (10).

6. Welding tool according to Claim 3 or 4, characterized in that the electrode pressing means (8) passes through the ball (13) of the ball-and-socket joint (11) and has above the ball-and-socket joint (11) a centring pin (14) which is connected to the reset means (10).

7. Welding tool according to Claim 4, 5 or 6, characterized in that the electrode holder (5) has a mounting housing (33) with two mutually connected housing halves (16, 17) in which the ball-and-socket joint (11) is guided and clamped.

8. Welding tool according to Claim 7, characterized in that the ball (13) and the guide shell (15) of the ball-and-socket joint (11) are in two parts and are in each case clamped together by way of adjusting discs (19).

9. Welding tool according to Claim 1 or 4, characterized in that the universal joint (12) has two axes (21, 23), a separate reset means (10) being provided for each axis (21, 23).

10. Welding tool according to Claim 1 or one of the following claims, characterized in that the reset means (10) is constructed as a resilient ball-and-notch means.

11. Manipulator having a welding tool according to Claim 1, 2 or 3, characterized in that the electrode holder (5) and the welding electrode (6) are aligned along the axis of rotation (27) of the manipulator hand (3).

12. Manipulator having a welding tool according to Claim 1 or one of the following claims, characterized in that the welding electrode (6) is aligned at an angle to the axis of rotation (27, 36) of the hand, and the electrode holder (5) is driven and rotatably connected to the manipulator hand (3) by way of a coupling hub (35).

## Revendications

1. Outil de soudage pour le soudage par points comportant des manipulateurs à axes multiples, constitué par un porte-électrode relié à la main du manipulateur et comportant une électrode de soudage, caractérisé par le fait que l'électrode de soudage (6) est réliée au porte-électrode (5) par l'intermédiaire d'un support (9) pouvant pivoter autour de plusieurs axes (21,23), le support (9) possédant un ou plusieurs dispositifs de rappel (10).

2. Outil de soudage suivant la revendication 1, caractérisé par le fait que le support (9) possède deux axes (21,23) correspondant aux degrés principaux de liberté en rotation, qui sont perpendiculaires entre eux et à l'axe longitudinal (28) de l'électrode de soudage (6) dans la position normale.

3. Outil de soudage suivant la revendication 1 ou 2, caractérisé par le fait que le porte-électrode (5) comporte un dispositif (8) d'application de la pression de l'électrode, qui est disposé entre l'électrode de soudage (6) et le support (9).

4. Outil de soudage suivant la revendication 1, 2 ou 3, caractérisé par le fait que le support (9) est réalisé sous la forme d'une articulation sphérique (11) ou d'un joint de cardan (12).

5. Outil de soudage suivant la revendication 3 ou 4, caractérisé par le fait que l'électrode de soudage (6) est raccordée directement ou indirectement à un boulon de centrage (14), qui traverse la sphère (13) de l'articulation sphérique (11) et est raccordée, à son extrémité, au dispositif de rappel (10).

6. Outil de soudage suivant la revendication 3 ou 4, caractérisé par le fait que le dispositif (8) d'application de la pression de l'électrode traverse la sphère (13) de l'articulation sphérique (11) et possède, au-dessus de l'articulation sphérique (11), un boulon de centrage (14), qui est raccordé au dispositif de rappel (10).

7. Outil de soudage suivant la revendication 4, 5 ou 6, caractérisé par le fait que le porte-électrode (5) comporte un boîtier de retenue (33) pourvu de deux moitiés (16,17) qui sont reliées entre elles et entre lesquelles l'articulation sphérique (11) est guidée et serrée.

8. Outil de soudage suivant la revendication 7, caractérisé par le fait que la sphère (13) et la coque de guidage (15) de l'articulation sphérique (11) sont divisées en deux et sont maintenues serrées respectivement moyennant l'interposition de rondelles de réglage (19).

9. Outil de soudage suivant la revendication 1 ou 4, caractérisé par le fait que le joint de cardan (12) comporte deux axes (21,23), pour chacun desquels est prévu un dispositif de rappel particulier (10).

10. Outil de soudage suivant la revendication 1 ou l'une des suivantes, caractérisé par le fait que le dispositif de rappel (10) est réalisé sous la forme d'un système élastique d'encliquetage à bille.

11. Manipulateur comportant un outil de soudage suivant la revendication 1, 2 ou 3, caractérisé par le fait que le porte-électrode (5) et l'électrode de soudage (6) sont alignés le long de l'axe de rotation (27) de la main du manipulateur.

12. Manipulateur comportant un outil de soudage suivant la revendication 1 ou l'une des suivantes, caractérisé par le fait que l'électrode de soudage (6) est alignée de manière à faire un angle par rapport à l'axe de rotation (27,36) de la main et que le porte-électrode (5) est raccordé, de manière à pouvoir tourner, par l'intermédiaire d'un moyeu d'accouplement (35) à la main (3) du manipulateur et est entraîné par cette dernière.
